# EUROPÄISCHE PATENTANMELDUNG

(11) **EP 4 490 997 A1**
(43) Veröffentlichungstag der Anmeldung: **15.01.2025**
(21) Anmeldenummer: 24176992.6
(22) Anmeldetag: 21.05.2024
(51) Int. Cl.: A01B 69/04, G05D 1/00

(54) **LANDWIRTSCHAFTLICHE ARBEITSMASCHINE**

(30) Priorität: 14.07.2023 DE 102023118675
(71) Anmelder: CLAAS E-Systems GmbH, 49201 Dissen (DE)
(72) Erfinder: Kruse, Alexander, 33818 Leopoldshöhe (DE); Uhlemann, Matthias, 49326 Melle (DE); Meyer zu Helligen, Lars Peter, 32139 Spenge (DE); Behmenburg, Jan, 58730 Fröndenberg (DE); Hemsen, Moritz, 59872 Meschede (DE); Monkenbusch, Robin, 33378 Rheda-Wiedenbrück (DE); Schoch, Bernd, 33334 Gütersloh (DE)
(74) Vertreter: CLAAS 365FarmNet GmbH

(57) **Zusammenfassung**

Die vorliegende Erfindung betrifft eine landwirtschaftliche Arbeitsmaschine (1) zum landwirtschaftlichen Einsatz auf einem landwirtschaftlichen Feld (2), welches einen Feldbereich (13) und einen Vorgewendebereich (10) aufweist.

Die vorliegende Erfindung beruht auf dem allgemeinen Gedanken, dass eine Einstellvorrichtung (3) die Einstellung der landwirtschaftliche Arbeitsmaschine (1) und/oder die vorgegebene Fahrroute (7, 8, 9, 12) in Abhängigkeit des Feldparameters und der Gesamtmasse der landwirtschaftliche Arbeitsmaschine (1) derart anpasst, dass die landwirtschaftliche Arbeitsmaschine (1) der vorgebenen Fahrroute (7, 8, 9, 12) folgen kann.

## Beschreibung

Die vorliegende Erfindung betrifft eine landwirtschaftliche Arbeitsmaschine zum landwirtschaftlichen Einsatz auf einem landwirtschaftlichen Feld.

In der modernen Landwirtschaft werden mit mehreren und/oder unterschiedlichen landwirtschaftlichen Arbeitsmaschinen mehrere unterschiedliche landwirtschaftlichen Felder bearbeitet, wobei vor dieser Bearbeitung die Feldbereiche und die Vorgewendebereich durch den Landwirt festgelegt werden.

Aus der DE 10 2006 019 216 A1 ist eine dynamische Aktualisierung der Vorgewende-Arbeitsschrittsequenz in Abhängigkeit vom konkreten, tatsächlichen Verlauf einer aktuellen Vorgewendefahrspur bekannt, sodass die einzelnen Arbeitsschritte immer synchronisiert zur Vorgewendefahrspur durchgeführt werden.

Der vorliegenden Erfindung liegt die Aufgabe zugrunde, eine verbesserte landwirtschaftliche Arbeitsmaschine anzugeben, die den Landwirt bei einer vorhergehend geplanten Bearbeitung des landwirtschaftlichen Feldes unterstützt, wobei insbesondere einer unterwünschten und/oder einer unpassenden Fahrt auf dem landwirtschaftlichen Feld entgegenwirkt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass eine Einstellvorrichtung die Einstellung der landwirtschaftliche Arbeitsmaschine und/oder die vorgegebene Fahrroute in Abhängigkeit des Feldparameters und der Gesamtmasse der landwirtschaftliche Arbeitsmaschine derart anpasst, dass die landwirtschaftliche Arbeitsmaschine der vorgebenen Fahrroute, insbesondere einer neu vorgebenen Fahrroute und/oder einer angepassten Fahrroute, folgen kann.

Die erfindungsgemäße landwirtschaftliche Arbeitsmaschine ist zum landwirtschaftlichen Einsatz auf einem landwirtschaftlichen Feld ausgebildet, welches wenigstens einen Feldbereich und wenigstens einen Vorgewendebereich aufweisen kann. Diese landwirtschaftliche Arbeitsmaschine weist wenigstens ein Anbaugerät zur Bearbeitung des Feldbereiches des landwirtschaftlichen Feldes auf. Die landwirtschaftliche Arbeitsmaschine kann als ein selbstfahrender Mähdrescher mit einem Anbaugerät in Form eines Vorsatzgerätes oder als selbstfahrender Feldhäcksler mit einem Anbaugerät in Form eines Vorsatzgerätes ausgebildet sein. Die landwirtschaftliche Arbeitsmaschine kann als ein Traktor mit wenigstens einem frontseitigen Anbaugerät und/oder mit wenigstens einem heckseitigen Anbaugerät ausbildet sein.

Innerhalb der landwirtschaftlichen Arbeitsmaschine ist eine Einstellvorrichtung angeordnet, die dazu vorgesehen und eingerichtet ist, die landwirtschaftliche Arbeitsmaschine in Abhängigkeit erfasster Betriebsparameter und satellitenbasierten Positionsinformationen derart einzustellen, dass die landwirtschaftliche Arbeitsmaschine innerhalb des landwirtschaftlichen Feldes einer vorgegebenen Fahrroute, die datentechnisch in der Einstellvorrichtung hinterlegt ist, entlangfährt. Unter eingerichtet kann zu verstehen sein, dass die Einstellvorrichtung dazu ausgebildet und/oder programmiert ist.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten der landwirtschaftlichen Arbeitsmaschine, bewirkt. Die Einstellvorrichtung kann eine Rechenvorrichtung und einen Datenspeicher aufweisen.

Die landwirtschaftliche Arbeitsmaschine kann wenigstens eine Messeinrichtung zur messtechnischen Erfassung des Betriebsparameters der landwirtschaftlichen Arbeitsmaschine, insbesondere von Komponenten der landwirtschaftlichen Arbeitsmaschine und/oder der Umgebung der landwirtschaftlichen Arbeitsmaschine, aufweisen. Die Messeinrichtung kann Sensoreinrichtung aufweisen.

Die landwirtschaftliche Arbeitsmaschine kann eine Positionsbestimmungseinrichtung zur satellitenbasierten Erfassung einer Position der landwirtschaftlichen Arbeitsmaschine bezüglich des landwirtschaftlichen Feldes aufweisen, um die satellitenbasierten Positionsinformationen zu erfassen. Die Positionsbestimmungseinrichtung kann zur Positionsbestimmung mittels Satellitennavigationssignalen ausgebildet und/oder programmiert sein, um beispielsweise Positionsdaten bereitstellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLO-NASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der landwirtschaftlichen Arbeitsmaschine auf dem landwirtschaftlichen Feld zu ermitteln. Hierbei kann die stationäre Bodenstation außerhalb des landwirtschaftlichen Feldes angeordnet sein.

Die Betriebsparameter weisen einen messtechnisch erfassten Feldparameter bezüglich des landwirtschaftlichen Feldes auf. Außerdem weisen die Betriebsparameter eine messtechnisch und/oder einstellungstechnisch erfasste Gesamtmasse der landwirtschaftlichen Arbeitsmaschine aufweisen.

Die Einstellvorrichtung ist dazu vorgesehen und eingerichtet ist, die Einstellung der landwirtschaftliche Arbeitsmaschine und/oder die vorgegebene Fahrroute in Abhängigkeit des Feldparameters und der Gesamtmasse derart anzupassen, dass die landwirtschaftliche Arbeitsmaschine der vorgebenen Fahrroute folgen kann. Hierfür kann die Einstellvorrichtung dazu vorgesehen und eingerichtet sein, die Trägheit der gesamten landwirtschaftlichen Arbeitsmaschine, insbesondere in Abhängigkeit der Ausgestaltung der landwirtschaftlichen Arbeitsmaschine und/oder Betriebszuständen der landwirtschaftlichen Arbeitsmaschine, im Lichte der vorgebenen Fahrroute zur Anpassung der Einstellung der landwirtschaftliche Arbeitsmaschine und/oder zur Anpassung der vorgegebenen Fahrroute einsetzen. Die Ausgestaltung der landwirtschaftlichen Arbeitsmaschine kann sich auf die Art von Anbaugeräten und/oder die Betriebszustände der landwirtschaftlichen Arbeitsmaschine können die Betriebszustände der Anbaugeräte aufweisen.

Hierdurch wird der Landwirt bezüglich seiner vorhergehend geplanten Bearbeitung des landwirtschaftlichen Feldes derart unterstützt, dass insbesondere einer unterwünschten und/oder einer unpassenden Fahrt auf dem landwirtschaftlichen Feld entgegenwirkt wird.

Bei einer vorteilhaften Weiterbildung der erfindungsgemäßen Lösung ist vorgesehen, dass die Betriebsparameter eine messtechnisch und/oder einstellungstechnisch erfasste Fahrgeschwindigkeit der landwirtschaftlichen Arbeitsmaschine aufweisen, wobei die Einstellvorrichtung dazu vorgesehen und eingerichtet ist, die Einstellung der landwirtschaftliche Arbeitsmaschine und/oder die vorgebenen Fahrroute in Abhängigkeit des Feldparameters, der Gesamtmasse und der Fahrgeschwindigkeit derart anzupassen, dass die landwirtschaftliche Arbeitsmaschine weiterhin der vorgebenen Fahrroute folgen kann.

Bei einer vorteilhaften Weiterbildung der erfindungsgemäßen Lösung ist vorgesehen, dass die Einstellvorrichtung dazu vorgesehen und eingerichtet ist, Einstellungsparameter einer oder mehrerer elektrohydraulischen Lenkvorrichtung der landwirtschaftliche Arbeitsmaschine unter Berücksichtigung der erfassten Betriebsparameter anzupassen. Die elektrohydraulische Lenkvorrichtung kann dazu eingerichtet sein, zumindest eine Fahrzeugachse der landwirtschaftliche Arbeitsmaschine für die Lenkung der landwirtschaftliche Arbeitsmaschine mittels elektrohydraulischer Zylinder einzustellen.

Bei einer vorteilhaften Weiterbildung der erfindungsgemäßen Lösung ist vorgesehen, dass der messtechnisch erfasste Betriebsparameter der landwirtschaftlichen Arbeitsmaschine ein Füllstand wenigstens eines Tanks der landwirtschaftlichen Arbeitsmaschine ist und/oder dass der messtechnisch erfasste Feldparameter eine ortabhängige Feuchtigkeit des landwirtschaftlichen Feldes betrifft, die mittels einer Kombination von Wetterinformation und satellitenbasierten Positionsinformationen bezüglich des landwirtschaftlichen Feldes ermittelt wurde. Die Wetterinformation kann eine Regenmenge, insbesondere die Regenmenge in Liter pro Quadratmeter, umfassen. Im Tank kann wenigstens eine Sensorvorrichtung vorhanden sein. Diese Sensorvorrichtung kann kommunizierend mit der Einstellvorrichtung verbunden sein. Da die Füllstände sich während des Betriebes der landwirtschaftlichen Arbeitsmaschine stets ändern, kann hierdurch die Einstellung der landwirtschaftliche Arbeitsmaschine und/oder die vorgegebene Fahrroute in Abhängigkeit des Feldparameters und der Gesamtmasse optimal angepasst werden. Hierbei kann die Einstellung der landwirtschaftliche Arbeitsmaschine und/oder die vorgegebene Fahrroute derart angepasst werden, dass eine Steckenbleiben und/oder eine gefährliches Verrutschen der landwirtschaftlichen Arbeitsmaschine verhindert und/oder vorschauend entgegengewirkt wird.

Bei einer vorteilhaften Weiterbildung der erfindungsgemäßen Lösung ist vorgesehen, dass ein Tank der landwirtschaftlichen Arbeitsmaschine einen Ernteguttank ausbildet, und/oder dass ein Tank der landwirtschaftlichen Arbeitsmaschine einen Korntank ausbildet, und/oder dass ein Tank der landwirtschaftlichen Arbeitsmaschine einen Kraftstofftank ausbildet.

Bei einer vorteilhaften Weiterbildung der erfindungsgemäßen Lösung ist vorgesehen, dass ein Tank der landwirtschaftlichen Arbeitsmaschine einen Teil eines landwirtschaftlichen Anbaugerätes der landwirtschaftlichen Arbeitsmaschine ausbildet, und/oder dass ein Tank der landwirtschaftlichen Arbeitsmaschine einen Teil eines landwirtschaftlichen Anbaugerätes der landwirtschaftlichen Arbeitsmaschine ausbildet, wobei das Anbaugerät ein Anhängerfahrwerk aufweist, und/oder dass der Tank ein Güllefass ausbildet.

Im Fall es eines Traktors mit einem Güllefass kann es vorgesehenen, dass die vorgegebene Fahrroute derart angepasst werden, dass der Traktor mit einem Güllefass nicht über nasse Abschnitte und/oder Nassbereiche des Feldes geführt wird.

Bei einer vorteilhaften Weiterbildung der erfindungsgemäßen Lösung ist vorgesehen, dass in der Einstellvorrichtung datentechnisch, insbesondere im internen Datenspeicher, zumindest das nachfolgende hinterlegt ist: eine vorgegebene Positionierung des Vorgewendebereiches innerhalb des landwirtschaftlichen Feldes, vorgegebene Abmessungen dieses Vorgewendebereiches, vorgegebene Fahrspuren innerhalb des Feldbereiches und Arbeitsmaschinenparameter bezüglich des Anbaugeräts. Diese datentechnisch hinterlegten Daten und/oder Informationen können vor einer Bearbeitung des landwirtschaftlichen Feldes datentechnisch in der Einstellvorrichtung hinterlegt worden sein. Die datentechnische Hinterlegung relevanter Daten kann in Verbindung mit den satellitenbasierten Positionsinformationen und/oder messtechnisch erfasste Betriebsparameter erfolgen.

Die Einstellvorrichtung ist dazu vorgesehen und eingerichtet, wenigstens eine Vorgewendefahrspur in Abhängigkeit der messtechnisch erfassten Betriebsparameter, der satellitenbasierten Positionsinformationen, dem Arbeitsmaschinenparameter bezüglich des Anbaugeräts, der vorgegebenen Fahrspuren, der vorgegebenen Positionierung und vorgegebenen Abmessungen des Vorgewendebereiches zu ermitteln und die landwirtschaftliche Arbeitsmaschine basierend auf der ermittelten Vorgewendefahrspur einzustellen.

Bei einer vorteilhaften Weiterbildung der erfindungsgemäßen Lösung ist vorgesehen, dass der Arbeitsmaschinenparameter bezüglich des Anbaugeräts die Anzahl der Anbaugeräte der landwirtschaftlichen Arbeitsmaschine aufweist, und/oder dass der Arbeitsmaschinenparameter bezüglich des Anbaugeräts die Art und/oder die Ausgestaltung des Anbaugeräts der landwirtschaftlichen Arbeitsmaschine aufweist. Die Anbaugeräts die Art und/oder die Ausgestaltung des Anbaugeräts kann sich auf geometrische Abmessungen des Anbaugeräts und/oder Betriebsarten des Anbaugeräts beziehen.

Bei einer vorteilhaften Weiterbildung der erfindungsgemäßen Lösung ist vorgesehen, dass der Arbeitsmaschinenparameter bezüglich des Anbaugeräts aufweist, ob das Anbaugerät als ein fronseitiges Anbaugerät oder ein heckseitiges Anbaugerät ausgebildet ist, wobei die Einstellvorrichtung dazu vorgesehen und eingerichtet ist, falls die landwirtschaftliche Arbeitsmaschine gemäß dem Arbeitsmaschinenparameter wenigstens ein heckseitiges Anbaugerät aufweist, dass bei der Ermittlung der Vorgewendefahrspur lediglich Vorgewendefahrspuren betrachtet werden, die ausschließlich ein Vorwärtsfahren der landwirtschaftlichen Arbeitsmaschine und kein Rückwärtsfahren der landwirtschaftlichen Arbeitsmaschine aufweisen.

Bei einer vorteilhaften Weiterbildung der erfindungsgemäßen Lösung ist vorgesehen, dass die landwirtschaftliche Arbeitsmaschine eine Fahrerkabine für einen Fahrer der landwirtschaftlichen Arbeitsmaschine aufweist, wobei in der Fahrerkabine eine interne Benutzerschnittstelle derart ausgebildet ist, dass der Fahrer zwar eine beliebige Vorgewendefahrspur einstellen kann, wobei die Einstellvorrichtung jedoch dazu vorgesehen und eingerichtet ist, die interne Benutzerschnittstelle derart einzustellen, dass dem Fahrer die ermittelte Vorgewendefahrspur zur Auswahl dargestellt wird. Die interne Benutzerschnittstelle kann ein Display bzw. einen Bildschirm aufweisen, um dem Fahrer die ermittelte Vorgewendefahrspur zur Auswahl optisch sichtbar darzustellen. Hierdurch wird dem Fahrer der optimale Betrieb der landwirtschaftlichen Arbeitsmaschine einfach und intuitiv ermöglicht. Die Benutzerschnittstelle kann sensorbasierend eine Berührung des Displays erfassen, um eine Auswahl der Vorgewendefahrspur zu ermitteln.

Bei einer vorteilhaften Weiterbildung der erfindungsgemäßen Lösung ist vorgesehen, dass die Einstellvorrichtung dazu vorgesehen und eingerichtet ist, die interne Benutzerschnittstelle derart einzustellen, dass dem Fahrer mehrere ermittelte Vorgewendefahrspuren zur Auswahl dargestellt werden. Hierdurch kann der Fahrer eine dieser ermittelten Vorgewendefahrspuren auswählen.

Bei einer vorteilhaften Weiterbildung der erfindungsgemäßen Lösung ist vorgesehen, dass in der Fahrerkabine eine interne Benutzerschnittstelle derart ausgebildet ist, dass der Fahrer zwar einen beliebigen Vorgewendebereiches innerhalb des landwirtschaftlichen Feldes und beliebige Abmessungen dieses Vorgewendebereiches bezüglich des landwirtschaftlichen Feldes einstellen kann, wobei jedoch die Einstellvorrichtung dazu vorgesehen und eingerichtet ist, die interne Benutzerschnittstelle derart einzustellen, dass dem Fahrer die vorgegebene Positionierung des Vorgewendebereiches innerhalb des landwirtschaftlichen Feldes und die vorgegebenen Abmessungen dieses Vorgewendebereiches zur Auswahl, insbesondere optisch sichtbar mittels des Displays, dargestellt wird.

Bei einer vorteilhaften Weiterbildung der erfindungsgemäßen Lösung ist vorgesehen, dass die Einstellvorrichtung dazu vorgesehen und eingerichtet ist, die vor einer Abschaltung der landwirtschaftlichen Arbeitsmaschine zuletzt verwendete Vorgewendefahrspur datentechnisch zu speichern und bei einem Einschalten der landwirtschaftlichen Arbeitsmaschine die interne Benutzerschnittstelle derart einzustellen, dass dem Fahrer zusätzlich zu einer ermittelten Vorgewendefahrspur die zuletzt verwendete Vorgewendefahrspur, insbesondere die zuletzt verwendete Vorgewendefahrspur bezüglich des landwirtschaftlichen Feldes, auf dem sich die landwirtschaftlichen Arbeitsmaschine befindet, zur Auswahl, insbesondere optisch sichtbar mittels des Displays, dargestellt wird.

Bei einer vorteilhaften Weiterbildung der erfindungsgemäßen Lösung ist vorgesehen, dass die Einstellvorrichtung dazu vorgesehen und eingerichtet ist, die interne Benutzerschnittstelle derart einzustellen, dass dem Fahrer zusätzlich zu der Auswahl der mehreren Vorgewendefahrspuren jeweils eine zusätzliche Information bezüglich der auswählbaren Vorgewendefahrspur, insbesondere optisch sichtbar mittels des Displays, darstellt wird.

Bei einer vorteilhaften Weiterbildung der erfindungsgemäßen Lösung ist vorgesehen, dass die zusätzliche Information bezüglich der Vorgewendefahrspuren die Flächengröße des Vorgewendebereiches und/oder die Länge der Vorgewendefahrspuren betrifft. Hierdurch wird dem Fahrer eine optimale Auswahl der Vorgewendefahrspur ermöglicht.

Bei einer vorteilhaften Weiterbildung der erfindungsgemäßen Lösung ist vorgesehen, dass die landwirtschaftliche Arbeitsmaschine eine externe Benutzerschnittstelle außerhalb der landwirtschaftlichen Arbeitsmaschine für einen Landwirt aufweist, wobei die Einstellvorrichtung dazu vorgesehen und eingerichtet ist, die externe Benutzerschnittstelle derart einzustellen, dass dem Landwirt ein Hinweis dargestellt wird, falls eine von der Einstellvorrichtung ermittelte Vorgewendefahrspur nicht verwendet wird und der Fahrer eine andere Vorgewendefahrspur einstellt.

Die externe Benutzerschnittstelle und die Einstellvorrichtung können miteinander kommunizierend verbunden sind. Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Bei einer vorteilhaften Weiterbildung der erfindungsgemäßen Lösung ist vorgesehen, dass die ermittelte Vorgewendefahrspur eine Ω-förmige Vorgewendefahrspur ausbildet, und/oder dass die ermittelte Vorgewendefahrspur eine U-förmige Vorgewendefahrspur ausbildet, und/oder dass die ermittelte Vorgewendefahrspur eine Y-förmige Vorgewendefahrspur ausbildet, und/oder dass die ermittelte Vorgewendefahrspur eine K-förmige Vorgewendefahrspur ausbildet. Die Ω-förmige und U-förmige Vorgewendefahrspur weisen im Gegensatz zur Y-förmigen und K-förmigen Vorgewendefahrspur kein Rückwärtsfahren der landwirtschaftlichen Arbeitsmaschine auf. Eine Ω-förmige Vorgewendefahrspur kann Keyhole-Turn bezeichnet werden.

Bei einer vorteilhaften Weiterbildung der erfindungsgemäßen Lösung ist vorgesehen, dass der messtechnisch erfasste Betriebsparameter eine Erntegutinformation, eine Wetterinformation, eine Standortinformation, einen weiteren Arbeitsmaschinenparameter und/oder einen Betriebszustand der landwirtschaftlichen Arbeitsmaschine betrifft.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein Anbaugerät einzustellen.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein frontseitiges Anbaugerät und/oder ein heckseitiges Anbaugerät einzustellen.

Bei einer vorteilhaften Weiterbildung der erfindungsgemäßen Lösung ist vorgesehen, dass die Einstellvorrichtung dazu vorgesehen und eingerichtet ist, in Abhängigkeit der ermitteln Vorgewendefahrspur wenigstens ein Anbaugerät teilweise, insbesondere teilweise asynchron, einzustellen, und/oder dass die Einstellvorrichtung dazu vorgesehen und eingerichtet ist, in Abhängigkeit der ermitteln Vorgewendefahrspur wenigstens ein frontseitiges Anbaugerät asynchron zu einem heckseitigen Anbaugerät einzustellen. Unter einer asynchronen Einstellung kann zu verstehen sein, dass eine erste Einstellung eines ersten Teils der landwirtschaftlichen Arbeitsmaschine zu einem ersten Zeitpunkt und eine weitere Einstellung eines weiteren Teils der landwirtschaftlichen Arbeitsmaschine zu einem weiteren Zeitpunkt erfolgt.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine perspektivische Seitenansicht auf eine erfindungsgemäße landwirtschaft-liche Arbeitsmaschine während einer Geradeausfahrt in einem Feldbereich, und
- Fig. 2: eine Draufsicht auf die erfindungsgemäße landwirtschaftliche Arbeitsmaschine während einer Geradeausfahrt im Feldbereich, und
- Fig. 3: eine Draufsicht auf mehrere mögliche Vorgewendefahrrouten.

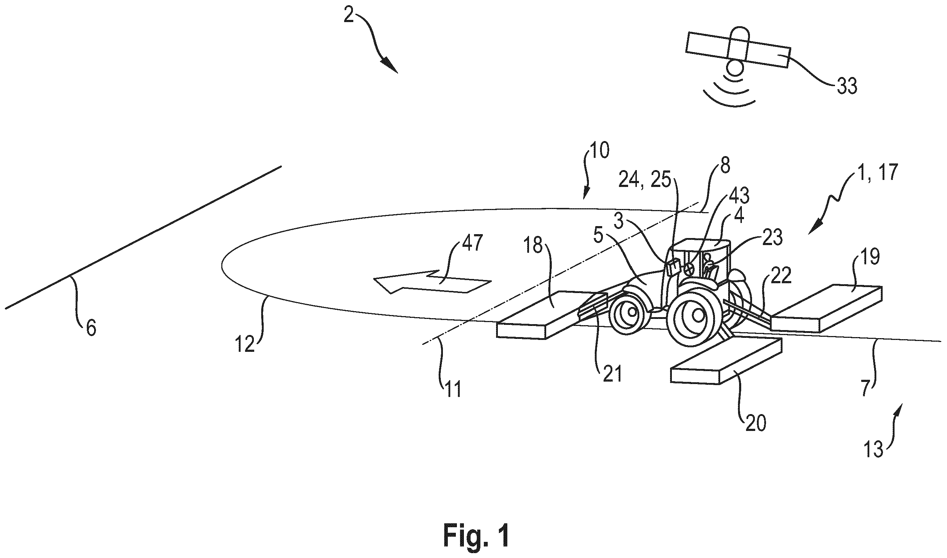

Die Fig. 1 zeigt eine perspektivische Seitenansicht einer landwirtschaftlichen Arbeitsmaschine 1 während eines landwirtschaftlichen Einsatzes auf einem landwirtschaftlichen Feld 2, welches von Feldgrenzen 6 begrenzt ist, innerhalb derer wenigstens ein Feldbereich 13 und wenigstens einen Vorgewendebereich 10 ausgebildet ist. Der Feldbereich 13 und der Vorgewendebereich 10 sind symbolisch durch eine Zwischengrenze 11 voneinander getrennt angedeutet dargestellt.

Die landwirtschaftliche Arbeitsmaschine 1 ist beispielhaft durch einen Traktor 17 ausgebildet, der ein frontseitiges Anbaugerät 18 und zwei hinterseitige Anbaugeräte 19, 20 umfasst. Diese landwirtschaftliche Arbeitsmaschine 1 weist einen Verbrennungsmotor 5 auf, der die landwirtschaftliche Arbeitsmaschine 1 entlang einer Vorwärtsfahrrichtung 47 derart geradeaus antreibt, dass die landwirtschaftliche Arbeitsmaschine 1 entlang einer Fahrspur 7 fährt, um eine Bearbeitung des Feldbereiches 13 des landwirtschaftlichen Feldes 2 zu erzielen und sich dabei der Zwischengrenze 11 und dem Vorgewendebereich 10 nähert. Das frontseitige Anbaugerät 18 ist bezüglich der Vorwärtsfahrrichtung 47 vor dem Verbrennungsmotor 5 positioniert, während die hinterseitigen Anbaugeräte 19, 20 bezüglich der Vorwärtsfahrrichtung 47 hinter dem Verbrennungsmotor 5 angeordnet sind. Die zwei hinterseitigen Anbaugeräte 19, 20 können quer zur Vorwärtsfahrrichtung 47 voneinander beabstandet ausgebildet sein. Alternativ oder zusätzlich kann das hinterseitige Anbaugeräte als mehrteiliges Anbaugerät 19, 20 ausgebildet sein.

Die landwirtschaftliche Arbeitsmaschine 1 weist ein Fronthubwerk 21 zur Höhenpositionierung des frontseitigen Anbaugerätes 18 bezüglich des landwirtschaftlichen Feldes 2 auf. Dieses Fronthubwerk 21 kann als hydraulisches Fronthubwerk ausgebildet sein. Ferner weist die landwirtschaftliche Arbeitsmaschine 1 eine Heckkopplung 22 auf, um die heckseitigen Anbaugerät 19, 20 mit dem Traktor 17 zu koppeln.

Die landwirtschaftliche Arbeitsmaschine 1 weist eine Fahrerkabine 4 mit einer Lenkvorrichtung 43 für einen Fahrer 23 der landwirtschaftlichen Arbeitsmaschine 1 auf, wobei in dieser Fahrerkabine 4 eine interne Benutzerschnittstelle 24 derart ausgebildet ist, dass der Fahrer 23 eine Vorgewendefahrspur 12 einstellen kann, welche die landwirtschaftliche Arbeitsmaschine 1 im Vorgewendebereich 10 abfährt, um in eine weitere nächstliegende Fahrspur 8 des Feldbereiches 13 zu erreichen.

Die landwirtschaftliche Arbeitsmaschine 1 ist dazu vorgesehen und ausgebildet, mittels wenigstens einem Satelliten 33 eine satellitenbasierte Positionsinformationen bezüglich der Position der landwirtschaftliche Arbeitsmaschine 1 innerhalb des landwirtschaftlichen Feldes 2 zu ermitteln.

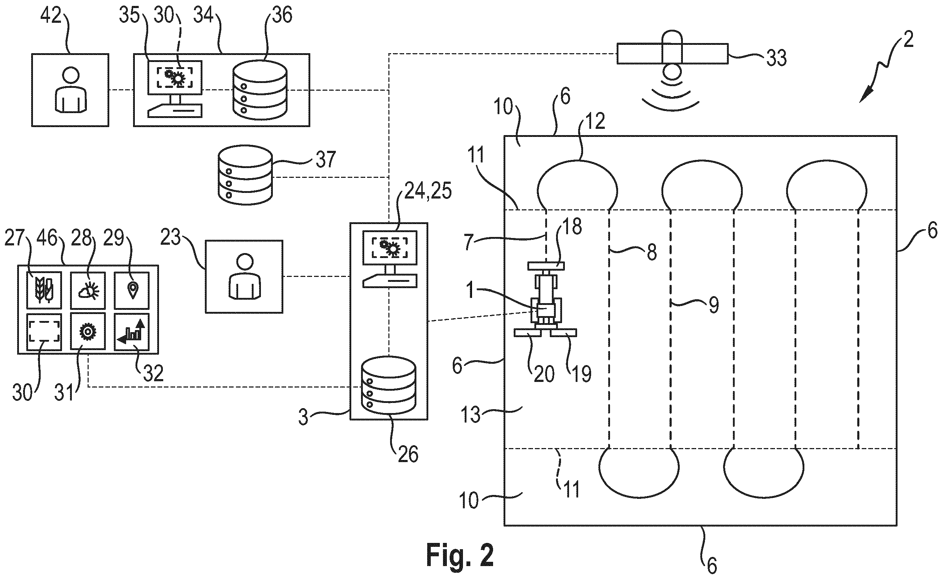

Wie in der Fig. 1 angedeutet, ist innerhalb der landwirtschaftlichen Arbeitsmaschine 1 eine Einstellvorrichtung 3 ausgebildet und angeordnet, wobei diese Einstellvorrichtung 3 nachfolgend anhand der Fig. 2 erläutert wird.

Die Einstellvorrichtung 3 ist dazu vorgesehen und eingerichtet, die landwirtschaftliche Arbeitsmaschine 1 in Abhängigkeit messtechnisch erfasster Betriebsparameter und satellitenbasierten Positionsinformationen derart einzustellen, dass die landwirtschaftliche Arbeitsmaschine 1 innerhalb des landwirtschaftlichen Feldes 2 einer vorgegebenen Fahrroute 7, 8, 9, 12, die datentechnisch in der Einstellvorrichtung 3 hinterlegt ist, entlangfährt.

Die Betriebsparameter weisen einen messtechnisch erfassten Feldparameter bezüglich des landwirtschaftlichen Feldes 2 auf. Ferner weisen die Betriebsparameter eine messtechnisch und/oder einstellungstechnisch erfasste Gesamtmasse der landwirtschaftlichen Arbeitsmaschine 1 auf. Die Einstellvorrichtung 3 ist dazu vorgesehen und eingerichtet ist, die Einstellung der landwirtschaftliche Arbeitsmaschine 1 und/oder die vorgegebene Fahrroute 7, 8, 9, 12 in Abhängigkeit des Feldparameters und der Gesamtmasse derart anzupassen, dass die landwirtschaftliche Arbeitsmaschine 1 der vorgebenen Fahrroute 7, 8, 9, 12 folgen kann. Mit anderen Worten ausgedrückt, wird eine unerwünschte Abweichung der vorgebenen Fahrroute 7, 8, 9, 12 vermieden und/oder ein unerwünschter Stillstand der landwirtschaftlichen Arbeitsmaschine 1, z.B. aufgrund einer zu hohen Gesamtmasse bei einem sehr feuchten Feldboden aufgrund von Regen, verhindert.

Die landwirtschaftliche Arbeitsmaschine 1 kann innerhalb des Feldbereiches 13 mehrere Fahrspuren 7, 8, 9 abfahren, wobei wenigstens zwei dieser Fahrspuren 7, 8, 9 mittels einer Vorgewendefahrspur 12 innerhalb des Vorgewendebereiches 10 miteinander verbunden sind.

Einer oder mehrere messtechnisch erfasste Betriebsparameter können in Form eines Datensatzes 46 im internen Datenspeicher 26 und/oder einem weiteren externen Datenspeicher 37 hinterlegt sein und Erntegutinformation 27, eine Wetterinformation 28, eine Standortinformation 29, einen weiteren Arbeitsmaschinenparameter 31 und/oder einen Betriebszustand 32 der landwirtschaftlichen Arbeitsmaschine 1 betreffen.

Die Betriebsparameter kann eine messtechnisch und/oder einstellungstechnisch erfasste Fahrgeschwindigkeit der landwirtschaftlichen Arbeitsmaschine 1 aufweisen, wobei die Einstellvorrichtung 3 dazu vorgesehen und eingerichtet sein kann, die Einstellung der landwirtschaftliche Arbeitsmaschine 1 und/oder die vorgebenen Fahrroute 7, 8, 9, 12 in Abhängigkeit des Feldparameters, der Gesamtmasse und der Fahrgeschwindigkeit derart anzupassen, dass die landwirtschaftliche Arbeitsmaschine 1 weiterhin der vorgebenen Fahrroute folgen kann.

Die Einstellvorrichtung 3 kann dazu vorgesehen und eingerichtet sein,_Einstellungsparameter einer nicht dargestellten elektrohydraulischen Lenkvorrichtung der landwirtschaftliche Arbeitsmaschine 1 unter Berücksichtigung der erfassten Betriebsparameter anzupassen.

Der messtechnisch erfasste Betriebsparameter der landwirtschaftlichen Arbeitsmaschine 1 kann ein Füllstand wenigstens eines nicht dargestellten Tanks der landwirtschaftlichen Arbeitsmaschine 1 sein. Zusätzlich kann der messtechnisch erfasste Feldparameter eine ortabhängige Feuchtigkeit des landwirtschaftlichen Feldes 2, die mittels einer Kombination von Wetterinformation 28 und satellitenbasierten Positionsinformationen bezüglich des landwirtschaftlichen Feldes 2 ermittelt wurde.

Der nicht dargestellte Tank der landwirtschaftlichen Arbeitsmaschine 1 kann einen Ernteguttank, einen Korntank, einen Kraftstofftank und/oder einen Tank, insbesondere ein Güllefass, eines Anbaugerätes ausbilden.

In der Einstellvorrichtung 3 ist datentechnisch, z.B. im internen Datenspeicher 26 innerhalb der landwirtschaftliche Arbeitsmaschine 1, eine vorgegebene Positionierung des Vorgewendebereiches 10 innerhalb des landwirtschaftlichen Feldes 2, vorgegebene Abmessungen dieses Vorgewendebereiches 10, vorgegebene Fahrspuren 7, 8, 9 innerhalb des Feldbereiches 13 und Arbeitsmaschinenparameter bezüglich des Anbaugeräts 18, 19, 20 hinterlegt.

Die Einstellvorrichtung 3 ist dazu vorgesehen und eingerichtet, wenigstens eine Vorgewendefahrspur 12 in Abhängigkeit der messtechnisch erfassten Betriebsparameter, der satellitenbasierten Positionsinformationen, dem Arbeitsmaschinenparameter bezüglich des Anbaugeräts 18, 19, 20, der vorgegebenen Fahrspuren 7, 8, 9, der vorgegebenen Positionierung und vorgegebenen Abmessungen des Vorgewendebereiches 10 zu ermitteln und die landwirtschaftliche Arbeitsmaschine 1 basierend auf der ermittelten Vorgewendefahrspur 12 einzustellen, insbesondere zu steuern und/oder zu regeln.

Der Arbeitsmaschinenparameter kann die Anzahl der Anbaugeräte 18, 19, 20 und/oder die Art und/oder die Ausgestaltung des Anbaugeräts 18, 19, 20 betreffen. Mittels der Arbeitsmaschinenparameter bezüglich des Anbaugeräts 18, 19, 20 kann erfasst werden, ob das Anbaugerät 18, 19, 20 ein fronseitiges Anbaugerät 18 oder ein heckseitiges Anbaugerät 19, 20 ist, wobei die Einstellvorrichtung 3 dazu vorgesehen und eingerichtet ist, falls die landwirtschaftliche Arbeitsmaschine 1 gemäß dem Arbeitsmaschinenparameter wenigstens ein heckseitiges Anbaugerät 19, 20 aufweist, dass bei der Ermittlung der Vorgewendefahrspur 12 lediglich Vorgewendefahrspuren 12 betrachtet werden, die ausschließlich ein Vorwärtsfahren der landwirtschaftlichen Arbeitsmaschine 1 aufweisen. Dies kann beispielweise eine Ω-förmige Vorgewendefahrspur (12) und/oder eine U-förmige Vorgewendefahrspur sein.

Die Einstellvorrichtung 3 kann dazu vorgesehen und eingerichtet sein, die interne Benutzerschnittstelle 24, die ein internes Display 25 aufweist, derart einzustellen, dass dem Fahrer 23 wenigstens eine oder mehrere ermittelte Vorgewendefahrspuren 12 zur Auswahl dargestellt werden.

Die in der Fahrerkabine 4 interne Benutzerschnittstelle 24 kann derart zusätzlich ausgebildet sein, dass der Fahrer 23 einen beliebigen Vorgewendebereiches 10 innerhalb des landwirtschaftlichen Feldes 2 und beliebige Abmessungen dieses Vorgewendebereiches 10 bezüglich des landwirtschaftlichen Feldes 2 einstellen kann, wobei die Einstellvorrichtung 3 dazu vorgesehen und eingerichtet ist, die interne Benutzerschnittstelle 24 derart einzustellen, dass dem Fahrer 23 die vorgegebene Positionierung des Vorgewendebereiches 10 innerhalb des landwirtschaftlichen Feldes 2 und die vorgegebenen Abmessungen dieses Vorgewendebereiches 10 zur Auswahl dargestellt wird.

Die Einstellvorrichtung 3 kann dazu vorgesehen und eingerichtet sein, die vor einer Abschaltung der landwirtschaftlichen Arbeitsmaschine 1 zuletzt verwendete Vorgewende-fahrspur 12 datentechnisch zu speichern und bei einem Einschalten der landwirtschaftlichen Arbeitsmaschine 1 die interne Benutzerschnittstelle 24 derart einzustellen, dass dem Fahrer 23 zusätzlich zu einer ermittelten Vorgewendefahrspur 12 auch die zuletzt verwendete Vorgewendefahrspur 12 zur Auswahl dargestellt wird.

Die landwirtschaftliche Arbeitsmaschine 1 weist eine externe Benutzerschnittstelle 34 auf, die außerhalb der landwirtschaftlichen Arbeitsmaschine 1 für einen Landwirt 42 ausgebildet ist und ein externes Display 35 und einen externen Datenspeicher 36 aufweist, wobei die Einstellvorrichtung 3 dazu vorgesehen und eingerichtet ist, diese externe Benutzerschnittstelle 34 derart einzustellen, dass dem Landwirt 42 ein Hinweis dargestellt wird, falls eine von der Einstellvorrichtung 3 ermittelte Vorgewendefahrspur 12 nicht verwendet wird und der Fahrer 23 eine andere Vorgewendefahrspur 12 einstellt. Hierfür können die externe Benutzerschnittstelle 34 und die Einstellvorrichtung 3 mittels wenigstens einer drahtlosen Datenverbindung miteinander kommunizierend verbunden sein.

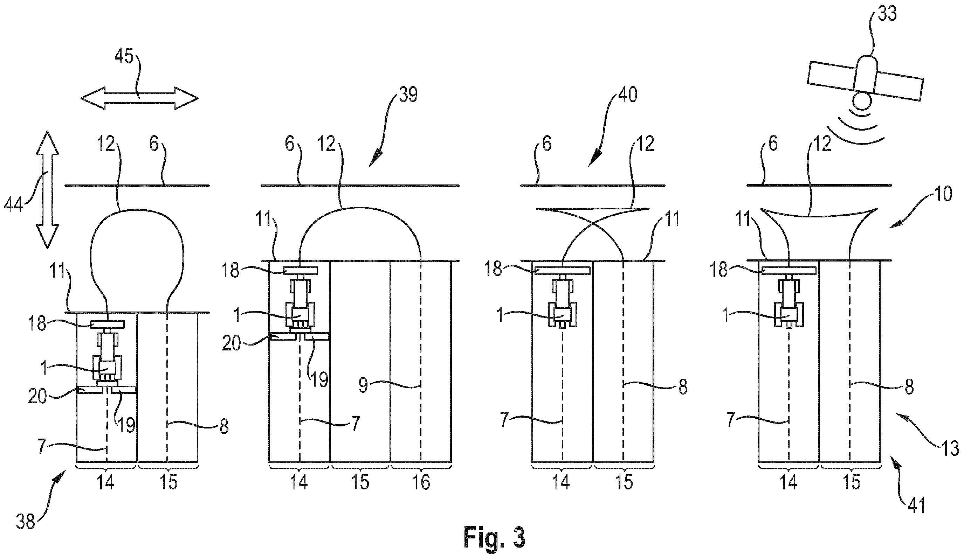

In der Fig. 3 sind beispielhaft mehrere verschiedene Vorgewendesituationen 38, 39, 40, 41 vergleichend dargestellt. Eine Längsachse 44 und Querachse 45 sind senkrecht und/oder orthogonal zueinander angeordnet, wobei die Längsachse 44 parallel zur jeder Fahrspur 7 ausgerichtet ist, während der Querachse 45 jeweils parallel zur Feldgrenze 6 ausgerichtet ist.

Die erste Vorgewendesituation 38 betrifft eine landwirtschaftliche Arbeitsmaschine 1, die ein frontseitiges Anbaugerät 18 und zwei heckseitige Anbaugeräte 19, 20 aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale Ω-förmige Vorgewendefahrspur 12 ermittelt.

Die zweite Vorgewendesituation 39 betrifft eine landwirtschaftliche Arbeitsmaschine 1, die ein frontseitiges Anbaugerät 18 und zwei heckseitige Anbaugeräte 19, 20 aufweist, um die während einer Fahrt entlang der Fahrspur 7 und der weiteren nicht nächstliegenden Fahrspur 9 die Teile 14 und 16 des Feldbereiches 13 landwirtschaftlich zu Bearbeiten. Die die Einstellvorrichtung 3 hat in diesem Fall eine optimale U-förmige Vorgewendefahrspur 12 ermittelt.

Die dritte Vorgewendesituation 40 betrifft eine landwirtschaftliche Arbeitsmaschine 1, die zwar ein frontseitiges Anbaugerät 18 jedoch kein heckseitiges Anbaugerät aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale Y-förmige Vorgewendefahrspur 12 ermittelt.

Die vierte Vorgewendesituation 41 betrifft eine landwirtschaftliche Arbeitsmaschine 1, die zwar ein frontseitiges Anbaugerät 18 jedoch kein heckseitiges Anbaugerät aufweist, um die während einer Fahrt entlang der Fahrspur 7 und der weiteren nächstliegenden Fahrspur 8 die Teile 14 und 15 des Feldbereiches 13 landwirtschaftlich zu Bearbeiten. Die die Einstellvorrichtung 3 hat in diesem Fall eine optimale K-förmige Vorgewendefahrspur 12 ermittelt.

Es ist in der Fig. 3 klar erkennbar, dass die Vorgewendefahrspur 12 und die Fläche des Vorgewendebereiches 10 zwischen der Feldgrenze 6 und der Zwischengrenze 11 in den Vorgewendesituation 38, 38 und 40 vollständig unterschiedlich ausgebildet ist. Die Vorgewendesituationen 40 und 41 weisen zwar einen identischen großen Vorgewendebereich 10 auf, jedoch ist die Art und die Länge der Vorgewendefahrspuren 12 unterschiedlich.

Die Einstellvorrichtung 3 kann dazu vorgesehen und eingerichtet sein, die interne Benutzerschnittstelle 24 derart einzustellen, dass dem Fahrer 23 zusätzlich zur Auswahlmöglichkeit der mehreren Vorgewendefahrspuren 12 jeweils eine zusätzliche Information bezüglich dieser auswählbaren Vorgewendefahrspuren 12 dargestellt wird. Diese zusätzlichen Informationen können sich auf die Flächengröße des Vorgewendebereiches 10 und/oder die Länge der Vorgewendefahrspuren 12 beziehen, um dem Fahrer 23 bei der Wahl der optimalen Vorgewendefahrspur 12 zu unterstützen.

### Bezugszeichenliste

- 1: landwirtschaftliche Arbeitsmaschine
- 2: landwirtschaftliches Feld
- 3: Einstellvorrichtung
- 4: Fahrerkabine
- 5: Verbrennungsmotor
- 6: Feldgrenze
- 7: Fahrspur
- 8: weitere nächstliegende Fahrspur
- 9: weitere Fahrspur
- 10: Vorgewendebereich
- 11: Zwischengrenze
- 12: Vorgewendefahrspur
- 13: Feldbereich
- 14: Teil des Feldbereiches
- 15: weiterer nächstliegende Teil des Feldbereiches
- 16: weiterer Teil des Feldbereiches
- 17: Traktor
- 18: fronseitiges Anbaugerät
- 19: Heckseitiges Anbaugerät
- 20: weiteres heckseitiges Anbaugerät
- 21: Fronthubwerk
- 22: Heckkopplung
- 23: Fahrer
- 24: interne Benutzerschnittstelle
- 25: internes Display
- 26: interner Datenspeicher
- 27: Erntegutinformationen
- 28: Wetterinformationen
- 29: Standortinformationen
- 30: Feldinformationen
- 31: Arbeitsmaschinenparameter
- 32: Betriebszustände
- 33: Satellit
- 34: externe Benutzerschnittstelle
- 35: externes Display
- 36: externer Datenspeicher
- 37: weiterer externer Datenspeicher
- 38: Erste Vorgewendesituation
- 39: Zweite Vorgewendesituation
- 40: Dritte Vorgewendesituation
- 41: Vierte Vorgewendesituation
- 42: Landwirt
- 43: Lenkvorrichtung
- 44: Längsachse
- 45: Querachse
- 46: Datensatz
- 47: Vorwärtsfahrtrichtung

## Patentansprüche

1. Landwirtschaftliche Arbeitsmaschine (1) zum landwirtschaftlichen Einsatz auf einem landwirtschaftlichen Feld (2),
- mit wenigstens einem Anbaugerät (18, 19, 20) zur Bearbeitung des Feldbereiches (13) des landwirtschaftlichen Feldes (2),
- mit einer innerhalb der landwirtschaftlichen Arbeitsmaschine (1) angeordneten Einstellvorrichtung (3), die dazu vorgesehen und eingerichtet ist, die landwirtschaftliche Arbeitsmaschine (1) in Abhängigkeit erfasster Betriebsparameter und satellitenbasierten Positionsinformationen derart einzustellen, dass die landwirtschaftliche Arbeitsmaschine (1) innerhalb des landwirtschaftlichen Feldes (2) einer vorgegebenen Fahrroute (7, 8, 9, 12), die datentechnisch in der Einstellvorrichtung (3) hinterlegt ist, entlangfährt,
**dadurch gekennzeichnet,**
- **dass** die Betriebsparameter einen messtechnisch erfassten Feldparameter bezüglich des landwirtschaftlichen Feldes (2) aufweisen, und
- **dass** die Betriebsparameter eine messtechnisch und/oder einstellungstechnisch erfasste Gesamtmasse der landwirtschaftlichen Arbeitsmaschine (1) aufweisen,
- wobei die Einstellvorrichtung (3) dazu vorgesehen und eingerichtet ist, die Einstellung der landwirtschaftliche Arbeitsmaschine (1) und/oder die vorgegebene Fahrroute (7, 8, 9, 12) in Abhängigkeit des Feldparameters und der Gesamtmasse derart anzupassen, dass die landwirtschaftliche Arbeitsmaschine (1) der vorgebenen Fahrroute (7, 8, 9, 12) folgen kann.

2. Landwirtschaftliche Arbeitsmaschine (1) nach Anspruch 1,
**dadurch gekennzeichnet,**
- **dass** die Betriebsparameter eine messtechnisch und/oder einstellungstechnisch erfasste Fahrgeschwindigkeit der landwirtschaftlichen Arbeitsmaschine (1) aufweisen,
- wobei die Einstellvorrichtung (3) dazu vorgesehen und eingerichtet ist, die Einstellung der landwirtschaftliche Arbeitsmaschine (1) und/oder die vorgebenen Fahrroute (7, 8, 9, 12) in Abhängigkeit des Feldparameters, der Gesamtmasse und der Fahrgeschwindigkeit derart anzupassen, dass die landwirtschaftliche Arbeitsmaschine (1) weiterhin der vorgebenen Fahrroute folgen kann.

3. Landwirtschaftliche Arbeitsmaschine (1) nach einem der vorhergehenden Ansprüche, **dadurch gekennzeichnet,**
**dass** die Einstellvorrichtung (3) dazu vorgesehen und eingerichtet ist,_Einstellungsparameter einer elektrohydraulischen Lenkvorrichtung der landwirtschaftliche Arbeitsmaschine (1) unter Berücksichtigung der erfassten Betriebsparameter anzupassen.

4. Landwirtschaftliche Arbeitsmaschine (1) nach einem der vorhergehenden Ansprüche, **dadurch gekennzeichnet,**
- **dass** der messtechnisch erfasste Betriebsparameter der landwirtschaftlichen Arbeitsmaschine (1) ein Füllstand wenigstens eines Tanks der landwirtschaftlichen Arbeitsmaschine (1) ist und/oder
- **dass** der messtechnisch erfasste Feldparameter eine ortabhängige Feuchtigkeit des landwirtschaftlichen Feldes (2) betrifft, die mittels einer Kombination von Wetterinformation (28) und satellitenbasierten Positionsinformationen bezüglich des landwirtschaftlichen Feldes (2) ermittelt wurde.

5. Landwirtschaftliche Arbeitsmaschine (1) nach Anspruch 4,
**dadurch gekennzeichnet,**
- **dass** ein Tank der landwirtschaftlichen Arbeitsmaschine (1) einen Ernteguttank ausbildet, und/oder
- **dass** ein Tank der landwirtschaftlichen Arbeitsmaschine (1) einen Korntank ausbildet, und/oder
- **dass** ein Tank der landwirtschaftlichen Arbeitsmaschine (1) einen Kraftstofftank ausbildet.

6. Landwirtschaftliche Arbeitsmaschine (1) nach Anspruch 4 oder 5,
**dadurch gekennzeichnet,**
- **dass** ein Tank der landwirtschaftlichen Arbeitsmaschine (1) einen Teil eines landwirtschaftlichen Anbaugerätes (18, 19, 20) der landwirtschaftlichen Arbeitsmaschine (1) ausbildet, und/oder
- **dass** ein Tank der landwirtschaftlichen Arbeitsmaschine (1) einen Teil eines landwirtschaftlichen Anbaugerätes (18, 19, 20) der landwirtschaftlichen Arbeitsmaschine (1) ausbildet, wobei das Anbaugerät (18, 19, 20) ein Anhängerfahrwerk aufweist, und/oder
- **dass** der Tank ein Güllefass ausbildet.

7. Landwirtschaftliche Arbeitsmaschine (1) nach einem der vorhergehenden Ansprüche, **dadurch gekennzeichnet,**
- **dass** das landwirtschaftliche Feld (2) wenigstens einen Feldbereich (13) und einen Vorgewendebereich (10) aufweist,
- wobei die vorgegebene Fahrroute (7, 8, 9, 12) Fahrspuren (7, 8, 9) und wenigstens eine Vorgewendefahrspur (12) aufweist,
- wobei eine vorgegebene Positionierung des Vorgewendebereiches (10) innerhalb des landwirtschaftlichen Feldes (2), vorgegebene Abmessungen dieses Vorgewendebereiches (10), vorgegebene Fahrspuren (7, 8, 9) innerhalb des Feldbereiches (13) und Arbeitsmaschinenparameter bezüglich des Anbaugeräts (18, 19, 20) datentechnisch in der Einstellvorrichtung (3) hinterlegt sind,
- wobei die Einstellvorrichtung (3) dazu vorgesehen und eingerichtet ist, wenigstens eine Vorgewendefahrspur (12) in Abhängigkeit der messtechnisch erfassten Betriebsparameter, der satellitenbasierten Positionsinformationen, dem Arbeitsmaschinenparameter bezüglich des Anbaugeräts (18, 19, 20), der vorgegebenen Fahrspuren (7, 8, 9), der vorgegebenen Positionierung und vorgegebenen Abmessungen des Vorgewendebereiches (10) zu ermitteln und die landwirtschaftliche Arbeitsmaschine (1) basierend auf der ermittelten Vorgewendefahrspur (12) einzustellen.

8. Landwirtschaftliche Arbeitsmaschine (1) nach Anspruch 7,
**dadurch gekennzeichnet,**
- **dass** der Arbeitsmaschinenparameter bezüglich des Anbaugeräts (18, 19, 20) die Anzahl der Anbaugeräte (18, 19, 20) der landwirtschaftlichen Arbeitsmaschine (1) aufweist, und/oder
- **dass** der Arbeitsmaschinenparameter bezüglich des Anbaugeräts (18, 19, 20) die Art und/oder die Ausgestaltung des Anbaugeräts (18, 19, 20) der landwirtschaftlichen Arbeitsmaschine (1) aufweist.

9. Landwirtschaftliche Arbeitsmaschine (1) nach Anspruch 7 oder 8,
**dadurch gekennzeichnet,**
- **dass** der Arbeitsmaschinenparameter bezüglich des Anbaugeräts (18, 19, 20) aufweist, ob das Anbaugerät (18, 19, 20) ein fronseitiges Anbaugerät (18) oder ein heckseitiges Anbaugerät (19, 20) ist,
- wobei die Einstellvorrichtung (3) dazu vorgesehen und eingerichtet ist, falls die landwirtschaftliche Arbeitsmaschine (1) gemäß dem Arbeitsmaschinenparameter wenigstens ein heckseitiges Anbaugerät (19, 20) aufweist, dass bei der Ermittlung der Vorgewendefahrspur (12) lediglich Vorgewendefahrspuren (12) betrachtet werden, die ausschließlich ein Vorwärtsfahren der landwirtschaftlichen Arbeitsmaschine (1) aufweisen.

10. Landwirtschaftliche Arbeitsmaschine (1) nach einem der Ansprüche 7 bis 9,
**dadurch gekennzeichnet,**
- **dass** die landwirtschaftliche Arbeitsmaschine (1) eine Fahrerkabine (4) für einen Fahrer (23) der landwirtschaftlichen Arbeitsmaschine (1) aufweist,
- wobei in der Fahrerkabine (4) eine interne Benutzerschnittstelle (24) derart ausgebildet ist, dass der Fahrer (23) eine beliebige Vorgewendefahrspur (12) einstellen kann,
- wobei die Einstellvorrichtung (3) dazu vorgesehen und eingerichtet ist, die interne Benutzerschnittstelle (24) derart einzustellen, dass dem Fahrer (23) die ermittelte Vorgewendefahrspur (12) zur Auswahl dargestellt wird.

11. Landwirtschaftliche Arbeitsmaschine (1) nach einem der Ansprüche 7 bis 10,
**dadurch gekennzeichnet,**
**dass** die Einstellvorrichtung (3) dazu vorgesehen und eingerichtet ist, die interne Benutzerschnittstelle (24) derart einzustellen, dass dem Fahrer (23) mehrere ermittelte Vorgewendefahrspuren (12) zur Auswahl dargestellt werden.

12. Landwirtschaftliche Arbeitsmaschine (1) nach Anspruch 10 oder 11,
**dadurch gekennzeichnet,**
- **dass** die in der Fahrerkabine (4) interne Benutzerschnittstelle (24) derart ausgebildet ist, dass der Fahrer (23) einen beliebigen Vorgewendebereiches (10) innerhalb des landwirtschaftlichen Feldes (2) und beliebige Abmessungen dieses Vorgewendebereiches (10) bezüglich des landwirtschaftlichen Feldes (2) einstellen kann,
- wobei die Einstellvorrichtung (3) dazu vorgesehen und eingerichtet ist, die interne Benutzerschnittstelle (24) derart einzustellen, dass dem Fahrer (23) die vorgegebene Positionierung des Vorgewendebereiches (10) innerhalb des landwirtschaftlichen Feldes (2) und die vorgegebenen Abmessungen dieses Vorgewendebereiches (10) zur Auswahl dargestellt wird.

13. Landwirtschaftliche Arbeitsmaschine (1) nach einem der Ansprüche 10 bis 12,
**dadurch gekennzeichnet,**
**dass** die Einstellvorrichtung (3) dazu vorgesehen und eingerichtet ist, die vor einer Abschaltung der landwirtschaftlichen Arbeitsmaschine (1) zuletzt verwendete Vorgewendefahrspur (12) datentechnisch zu speichern und bei einem Einschalten der landwirtschaftlichen Arbeitsmaschine (1) die interne Benutzerschnittstelle (24) derart einzustellen, dass dem Fahrer (23) zusätzlich zu einer ermittelten Vorgewendefahrspur (12) die zuletzt verwendete Vorgewendefahrspur (12) zur Auswahl dargestellt wird.

14. Landwirtschaftliche Arbeitsmaschine (1) nach einem der Ansprüche 10 bis 13,
**dadurch gekennzeichnet,**
**dass** die Einstellvorrichtung (3) dazu vorgesehen und eingerichtet ist, die interne Benutzerschnittstelle (24) derart einzustellen, dass dem Fahrer (23) zusätzlich zu der Auswahl der mehreren Vorgewendefahrspuren (12) jeweils eine zusätzliche Information bezüglich der auswählbaren Vorgewendefahrspur (12) darstellt wird.

15. Landwirtschaftliche Arbeitsmaschine (1) nach Anspruch 14,
**dadurch gekennzeichnet,**
**dass** die zusätzliche Information bezüglich der Vorgewendefahrspuren (12) die Flächengröße des Vorgewendebereiches (10) und/oder die Länge der Vorgewendefahrspuren (12) betrifft.
